# EUROPEAN PATENT SPECIFICATION

(11) **EP 1 868 834 B1**
(45) Date of publication and mention of the grant of the patent: **28.10.2009**
(21) Application number: 05743133.0
(22) Date of filing: 01.04.2005
(51) Int. Cl.: B60K 17/04, E01C 19/27, B60K 7/00

(54) **DRIVE SYSTEM FOR DUAL WHEELS, PARTICULARLY OF THE TYPE USED ON ROAD ROLLERS**
ANTRIEBSSYSTEM FÜR ZWILLINGSRÄDER, INSBESONDERE DER AN STRASSENWALZEN VERWENDETEN ART
SYSTEME D ENTRAINEMENT POUR ROUES JUMELEES, EN PARTICULIER DU TYPE UTILISE SUR LES ROULEAUX COMPRESSEURS

(43) Date of publication of application: 26.12.2007
(73) Proprietor: Bonfiglioli Riduttori S.p.A., Calderara di Reno (IT)
(72) Inventor: ZINZANI, Giovanni, I-48018 Faenza (IT)
(74) Representative: Jorio, Paolo
(86) International application number: PCT/IT2005/000179
(87) International publication number: WO 2006/103708

(56) References cited:
- EP-A- 0 457 028
- EP-A- 0 864 694
- DE-A1- 19 801 030

## Description

### TECHNICAL FIELD

The present invention relates to a drive system for dual wheels, particularly of the type used on road rollers.

### BACKGROUND ART

Road rollers are known which, instead of a metal roller, feature a number of inflatable compacting wheels.

Machines of this type are used for producing extremely smooth road surfaces.

Road rollers normally comprise four rear drive wheels and four front direction wheels.

In a first known embodiment, each rear wheel is rotated by an independent hydraulic system, which means four independent drive systems must be provided, thus increasing production cost of the road roller.

A second known embodiment comprises a single drive system, in turn comprising an axle with a differential, and two transmissions using chains or a cascade of gears. Each transmission is able to drive one set of dual wheels. Both the above embodiments, however, are complicated and expensive.

EP-A-864 694 discloses a drive system with the features of the preamble of claim 1.

### DISCLOSURE OF INVENTION

It is therefore a main object of the present invention to provide a dual-wheel drive system designed to eliminate the aforementioned drawbacks.

According to the present invention, there is provided a drive system for dual wheels, particularly of the type used on road rollers, as claimed in Claim 1.

### BRIEF DESCRIPTION OF THE DRAWINGS

A non-limiting embodiment of the present invention will be described by way of example with reference to the accompanying drawings, in which:
Figure 1 shows an overall side view of a road roller featuring at least one drive system in accordance with the main object of the present invention;
Figure 2 shows a front view of the Figure 1 road roller;
Figure 3 shows a rear view of the Figure 1 road roller;
Figure 4 shows a schematic plan view of the axles of the Figure 1-3 road roller;
Figure 5 shows an overall view of the drive system in accordance with the main object of the present invention;
Figure 6 shows a section, in plane α, of the Figure 5 assembly;
Figure 7 shows a section, in plane β, of the Figure 5 assembly.

### BEST MODE FOR CARRYING OUT THE INVENTION

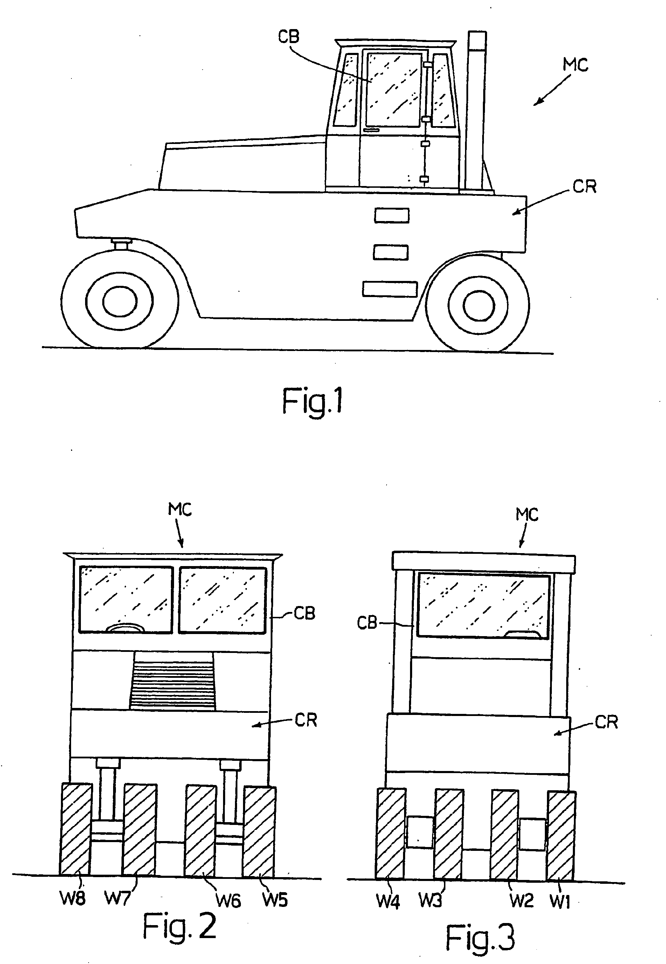

MC in Figure 1 indicates a road roller equipped with at least one drive system in accordance with the main object of the present invention (see below).

Roller MC comprises, in known manner, a body CR comprising an operator cab CB.

As also shown in Figures 2, 3, 4, roller MC comprises four tyred rear wheels W1, W2, W3, W4 and four tyred front wheels W5, W6, W7, W8.

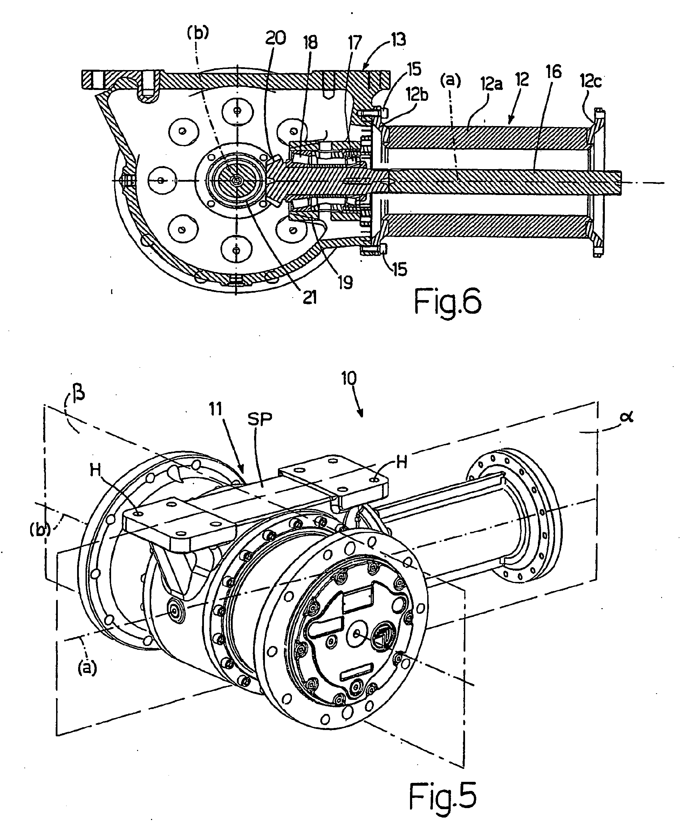

Number 10 in Figure 5 indicates as a whole a drive system in accordance with the present invention, and which is fitted to each set of dual wheels W1, W2 and W3, W4.

Drive system 10 comprises a substantially T-shaped main structure 11.

More specifically, main structure 11 comprises a flanged sleeve 12 (Figure 6); and a housing structure 13 housing two drive and reduction devices (see below, Figures 2 and 3).

As shown in Figure 5, structure 13 is fitted integrally with a plate SP with holes H for bolts (not shown) by which to fix drive system 10 to the frame (not shown) of roller MC (Figure 1).

As shown in Figure 6, sleeve 12 comprises a tubular portion 12a fitted with two end flanges 12b and 12c.

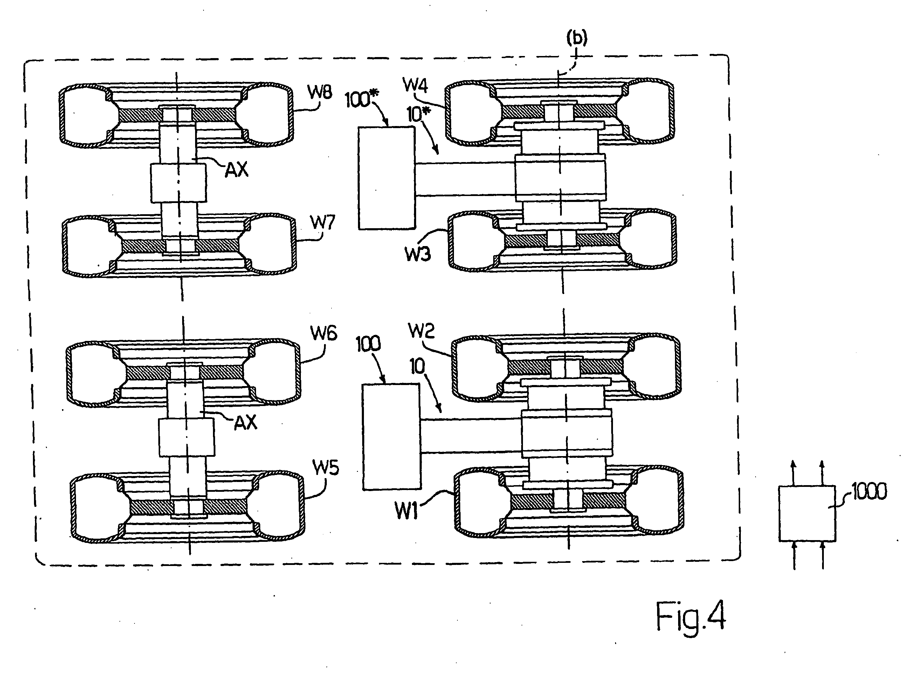

Flange 12b connects sleeve 12 to housing structure 13 by means of screws 15 (Figure 6), while flange 12c fixes the sleeve 12 to the body of a hydraulic brake (not shown) fitted with a hydraulic motor (not shown), which rotates a drive shaft 16 (Figure 6) for transmitting motion to a set of tyred dual wheels, e.g. W1, W2 (Figure 4).

As shown in Figure 6, drive shaft 16 is supported on two bearings 17, 18 in turn resting on a tubular supporting member 19 integral with structure 13.

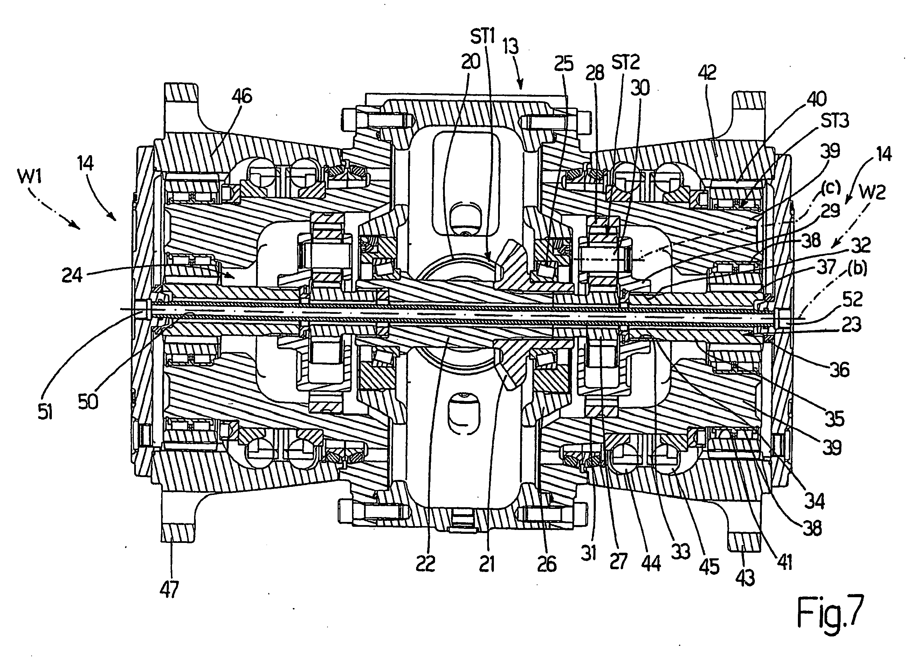

Drive shaft 16 is fitted at one end with a bevel gear 20 meshing, in use, with a ring gear 21 (Figures 6, 7).

As shown in Figure 7, ring gear 21 is fitted to a shaft 22, which transmits motion to two identical drive and reduction devices 23, 24.

As shown in Figures 5, 6, the longitudinal axis (a) of drive shaft 16 is perpendicular to and forms a T with the longitudinal axis (b) of shaft 22.

A respective wheel W1, W2, W3, W4 (not shown in Figure 7; see Figure 4), is fitted by known means to each device 23, 24.

Since, as stated, both devices 23, 24 are identical, only one is described in detail below.

As will be seen, in addition to transmitting motion from drive shaft 16 to a tyred wheel (not shown in Figure 7), device 23 also provides for reducing input speed to structure 13 by means of three reduction stages ST1, ST2, ST3.

More specifically, the first reduction stage ST1 is defined by the bevel gear 20 and ring gear 21 connection. The other two reduction stages ST2, ST3 are described in detail below.

The portion of shaft 22 relating to device 23 rests on a bearing 25 in turn supported by a support 26 integral with structure 13.

Shaft 22 is fitted with a sun gear 27 of the second reduction stage ST2, which meshes with a number of planet gears 28 (only one shown in Figure 7); and each planet gear 28 is fitted to a planet carrier 29 by means of a respective pin 30 having an axis (c) parallel to axis (b).

In addition to sun gear 27, each planet gear 28 also meshes with a fixed ring gear 31 on the inner wall of structure 13.

To sum up, the second reduction stage ST2 comprises sun gear 27, planet gears 28, planet carrier 29, pins 30, and fixed ring gear 31.

As shown in Figure 7, planet carrier 29 has a cavity 32 having a number of teeth 33, which mesh with splines 34 formed on a shaft 35, the free end of which rests on a thrust bearing 36. Shaft 35 is fitted with a sun gear 37 meshing with a number of planet gears 38 (only two shown in Figure 7) fitted to a fixed planet carrier 39 forming part of housing structure 13.

In addition to meshing with sun gear 37, planet gears 38 also mesh with a ring gear 40 on the wall of a cavity 41 formed on a member 42 having a flange 43, to which a wheel W1, W2, W3, W4 is bolted.

As shown in Figure 7, member 42 is supported on two bearings 44, 45 fitted to fixed planet carrier 39.

To sum up, the third reduction stage ST3 comprises shaft 35, sun gear 37, planet gears 38, planet carrier 39, and ring gear 40.

In other words, motion is transmitted by drive shaft 16, which rotates ring gear 21 via bevel gear 20.

The first element in the drive and reduction train to each wheel is therefore bevel gear 20, and the last is member 42 (to which, in fact, a wheel W1, W2, W3, W4 is fitted).

The same shaft 22 of device 23 transmits motion to a member 46 (and associated flange 47) of device 24, to which a wheel W1, W2, W3, W4 is fitted.

The Figure 4 application, for example, shows two systems 10 and 10* fitted to the rear of a road roller MC (shown only partly).

In the example shown, system 10 rotates a set of dual wheels W1, W2, and system 10* a set of dual wheels W3, W4.

The embodiment in the accompanying drawings therefore shows a mechanical drive comprising at least two drive systems 10, 10* as described above.

As shown in Figure 4, system 10 is combined with a respective hydraulic motor 100, and system 10* with a respective hydraulic motor 100*.

Since both hydraulic motors 100, 100* of the mechanical drive are connected parallel to their hydraulic control circuit, the so-called "differential effect" is produced automatically when steering road roller MC.

As shown in Figure 4, the roller has a front axle AX.

Axle AX is fitted with four front non-drive wheels W5, W6, W7, W8 connected in pairs.

Another feature of the present invention relates to compressed-air supply to wheels W1, W2, W3, W4.

As shown in Figure 7, a channel 50 for feeding compressed air to wheels W1, W2, W3, W4 extends along each shaft 22.

One end 51 of channel 50, corresponding to the inner side of the roller, is fitted with a rotary joint (not shown) for connection to a fixed branch of an air feed circuit (not shown); and a respective hose (not shown) extends from each end 51, 52 to feed compressed air to a tyre of a respective wheel (W1, W2 or W3, W4).

The air pressure of wheels W1, W2, W3, W4 is thus equalized.

## Claims

1. A drive system (10, 10*) for dual wheels (W1, W2, W3, W4), particularly of the type used on road rollers (MC); the drive system (10, 10*) comprises a substantially T-shaped main structure (11); said main structure (11) housing a drive shaft (16) substantially perpendicular to two drive and reduction devices (23, 24), each of said drive and reduction devices (23, 24) being associated with a respective dual wheel (W1, W2, W3, W4); wherein each drive and reduction device (23, 24) comprises at least two reduction stages (ST1, ST2, ST3);
wherein each drive and reduction device (23, 24) comprises
(a) - a first reduction stage (ST1) which is defined by a bevel gear (20) meshing with a ring gear (21);
(b) - a second reduction stage (ST2) which is defined by a sun gear (27), planet gears (28), a planet carrier (29), pins (30), and a fixed ring gear (31) **characterized in that** the fixed ring gear (31) is fixed on the internal wall of a fixed planet carrier (39); and the drive system further comprising
(c) - a third reduction stage (ST3) which is defined by a shaft (35) ; a sun gear (37); a number of planet gears (38); the fixed planet carrier (39); and a ring gear (40) located in a cavity (41) formed on a member (42) having a flange (43) to which a wheel (W1, W2, W3, W4) is fixable; said member (42) being supported on two bearings (44, 45) fitted to an external wall of said fixed planet carrier (39).

2. A drive system (10, 10*) as claimed in Claim 1 of the foregoing Claims, **characterized by** comprising a plate (SP) by which to fix said drive system (10) to the frame of the road roller (MC).

3. A drive system (10, 10*) as claimed in any one of the foregoing Claims, **characterized by** being fitted through with a channel (50) for feeding compressed air to two tires of two wheels (W1, W2; W3, W4).

4. A mechanical drive, **characterized by** comprising at least two drive systems (10, 10*) as claimed in any one of the foregoing Claims.

5. A mechanical drive as claimed in Claim 4, **characterized in that** each drive system (10, 10*) comprises a respective hydraulic motor (100, 100*); each hydraulic motor (100, 100*) being connected parallel to a respective hydraulic control circuit to automatically produce a "differential effect".

6. A mechanical drive as claimed in Claim 4 or 5, **characterized by** being applied to the rear wheels (W1, W2, W3, W4) of a road roller (MC).

## Patentansprüche

1. Antriebssystem (10, 10*) für Zwillingsräder (W1, W2, W3, W4), insbesondere des Typs, der an Straßenwalzen (MC) verwendet wird; wobei das Antriebssystem (10, 10*) eine im Wesentlichen T-förmige Hauptstruktur (11) enthält, wobei die Hauptstruktur (11) eine Antriebswelle (16) aufweist, die zu zwei Antriebs- und Untersetzungsvorrichtungen (23, 24) im Wesentlichen senkrecht ist, wobei jede der Antriebs- und Untersetzungsvorrichtungen (23, 24) einem entsprechenden Zwillingsrad (W1, W2, W3, W4) zugeordnet ist; wobei jede Antriebs- und Untersetzungsvorrichtung (23, 24) wenigstens zwei Untersetzungsstufen (ST1, ST2, ST3) enthält;
wobei jede Antriebs- und Untersetzungsvorrichtung (23, 24) enthält:
(a) - eine erste Untersetzungsstufe (ST1), die definiert ist durch ein Kegelrad (20), das mit einem Hohlrad (21) kämmt;
(b) - eine zweite Untersetzungsstufe (ST2), die definiert ist durch ein Sonnenrad (27), Planetenräder (28), einen Planetenträger (29), Stifte (30) und ein festes Hohlrad (31), **dadurch gekennzeichnet, dass** das feste Hohlrad (31) an der Innenwand eines festen Planetenträgers (39) befestigt ist und das Antriebssystem ferner umfasst:
(c) - eine dritte Untersetzungsstufe (ST3), die definiert ist durch eine Welle (35); ein Sonnenrad (37); eine Anzahl Planetenräder (38); den festen Planetenträger (39); und ein Hohlrad (40), das sich in einem Hohlraum (41) befindet, der an einem Element (42) mit einem Flansch (43), an dem ein Rad (W1, W2, W3, W4) befestigt werden kann, ausgebildet ist; wobei das Element (42) an zwei Lagern (44, 45) unterstützt ist, die an einer Außenwand des festen Planetenträgers (39) angebracht sind.

2. Antriebssystem (10, 10*) nach Anspruch 1 oder den vorhergehenden Ansprüchen, **gekennzeichnet durch** eine Platte (SP), **durch** die das Antriebssystem (10) am Rahmen der Straßenwalze (MC) zu befestigen ist.

3. Antriebssystem (10, 10*) nach einem der vorhergehenden Ansprüche, **dadurch gekennzeichnet, dass** durch es ein Kanal (50) für die Zufuhr von Druckluft zu zwei Reifen von zwei Rädern (W1, W2; W3, W4) verläuft.

4. Mechanischer Antrieb, **gekennzeichnet durch** wenigstens zwei Antriebssysteme (10, 10*) nach einem der vorhergehenden Ansprüche.

5. Mechanischer Antrieb nach Anspruch 4, **dadurch gekennzeichnet, dass** jedes Antriebssystem (10, 10*) einen jeweiligen Hydraulikmotor (100, 100*) enthält; wobei jeder Hydraulikmotor (100, 100*) parallel zu einem entsprechenden Hydrauliksteuerkreis geschaltet ist, um automatisch eine "Differentialwirkung" zu erzeugen.

6. Mechanischer Antrieb nach Anspruch 4 oder 5, **dadurch gekennzeichnet, dass** er auf die Hinterräder (W1, W2, W3, W4) einer Straßenwalze (MC) angewendet wird.

## Revendications

1. Système d'entraînement (10, 10*) pour roues jumelées (W1, W2, W3, W4), en particulier du type utilisé sur des rouleaux compresseurs (MC) ; le système d'entraînement (10, 10*) comprenant une structure principale sensiblement en forme de T (11) ; ladite structure principale (11) logeant un arbre d'entraînement (16) sensiblement perpendiculaire à deux dispositifs d'entraînement et de réduction (23, 24), chacun desdits dispositifs d'entraînement et de réduction (23, 24) étant associé à des roues jumelées respectives (W1, W2, W3, W4) ; dans lequel chaque dispositif d'entraînement et de réduction (23, 24) comprend au moins deux étages de réduction (ST1, ST2, ST3) ;
dans lequel chaque dispositif d'entraînement et de réduction (23, 24) comprend :
(a) un premier étage de réduction (ST1) qui est défini par une roue conique (20) s'engrenant sur une couronne (21) ;
(b) un deuxième étage de réduction (ST2), qui est défini par une roue solaire (27), des pignons satellites (28), un porte-pignons satellites (29), des broches (30) et une couronne fixe (31), **caractérisé en ce que** la couronne fixe (31) est fixée sur la paroi interne d'un porte-pignons satellites fixe (39) ; et le système d'entraînement comprenant en outre :
(c) un troisième étage de réduction (ST3), qui est défini par un arbre (35) ; une roue solaire (37) ; un certain nombre de pignons satellites (38) ; le porte-pignons satellites fixe (39) ; et une couronne (40) située dans une cavité (41) formée sur un élément (42) ayant une bride (43) à laquelle peut être fixée une roue (W1, W2, W3, W4) ; ledit élément (42) étant supporté sur deux paliers (44, 45) ajustés sur une paroi externe dudit porte-pignons satellites fixe (39).

2. Système d'entraînement (10, 10*) selon la revendication 1 précédente, **caractérisé en ce qu'**il comprend une plaque (SP) par laquelle on peut fixer ledit système d'entraînement (10) au châssis du rouleau compresseur (MG).

3. Système d'entraînement (10, 10*) selon l'une quelconque des revendications précédentes, **caractérisé en ce qu'**il est traversé par un canal (50) pour acheminer de l'air comprimé aux deux pneus de deux roues (W1 W2; W3, W4).

4. Entraînement mécanique, **caractérisé en ce qu'**il comprend au moins deux systèmes d'entraînement (10, 10*) selon l'une quelconque des revendications précédentes.

5. Entraînement mécanique selon la revendication 4, **caractérisé en ce que** chaque système d'entraînement (10, 10*) comprend un moteur hydraulique respectif (100, 100*) ; chaque moteur hydraulique (100, 100*) étant raccordé en parallèle à un circuit de commande hydraulique respectif afin de produire automatiquement un "effet différentiel".

6. Entraînement mécanique selon la revendication 4 ou 5, **caractérisé en ce qu'**il est applique aux roues arrière (W1, W2, W3, W4) d'un rouleau compresseur (MC).
